# EUROPÄISCHE PATENTSCHRIFT

(11) **EP 2 018 513 B1**
(45) Veröffentlichungstag und Bekanntmachung des Hinweises auf die Patenterteilung: **13.10.2010**
(21) Anmeldenummer: 07724555.3
(22) Anmeldetag: 25.04.2007
(51) Int. Cl.: G01B 11/27

(54) **VORRICHTUNG UND VERFAHREN ZUR BEURTEILUNG DER RELATIVEN RAUMLAGE ZWEIER GEGENSTÄNDE**
DEVICE AND METHOD FOR MEASURING THE RELATIVE SPATIAL POSITION OF TWO OBJECTS
DISPOSITIF ET PROCÉDÉ PERMETTANT D'ÉVALUER LA POSITION RELATIVE DANS L'ESPACE DE DEUX OBJETS

(30) Priorität: 28.04.2006 DE 102006020358; 17.05.2006 DE 102006023408; 19.05.2006 DE 102006023926
(43) Veröffentlichungstag der Anmeldung: 28.01.2009
(73) Patentinhaber: Prüftechnik Dieter Busch AG, 85737 Ismaning (DE)
(72) Erfinder: HERMANN, Michael, 78048 Villingen-Schwenningen (DE)
(86) Internationale Anmeldenummer: PCT/EP2007/003625
(87) Internationale Veröffentlichungsnummer: WO 2007/124902

(56) Entgegenhaltungen:
- EP-A- 1 710 602
- US-A- 3 739 176
- US-A1- 2004 174 542
- US-A1- 2005 235 504

## Beschreibung

Die Erfindung bezieht sich auf ein Verfahren und zugehörige Vorrichtungen zur quantitativen Beurteilung der räumlichen Positionierung und Orientation zweier Maschinen oder Maschinenteile relativ zueinander, wie zum Beispiel Wellen, Werkzeugmaschinenspindeln, Werkstücken oder anderen physischen Gegenständen. Die Erfindung ist ebenfalls dazu geeignet, die Fluchtung oder die Ausrichtung von zwei zueinander auszurichtenden zylindrischen Objekten quantitativ zu vermessen oder zu beurteilen, beispielsweise an Rohren oder Pipelines. Weiterhin ist die Vorrichtung geeignet, als Sensor in einem Koordinatenmeßgerät oder einem Meßroboter zu dienen. Darüberhinaus ist die Erfindung geeignet, als Meßeinrichtung bei Vermessungsaufgaben im Hoch- oder Tiefbau, insbesondere beim Tunnelbau, Anwendung zu finden.

Verfahren und Vorrichtungen ähnlicher Art sind seit mehreren Jahren erfolgreich bei der Beurteilung der räumlichen Positionierung und Orientation zweier Maschinen oder Maschinenteile relativ zueinander in Gebrauch und haben sich dadurch ausgezeichnet, dass durch ihre Anwendung ein enormes Maß an Arbeitszeit eingespart worden ist.

Eine entsprechende gattungsgemäße Vorrichtung ist aus der DE 10117390 bekannt, in welcher auf weiteren diesbezüglichen Stand der Technik hingewiesen wird.

In der genannten Schrift wird dargestellt, wie die fluchtende Lage zweier Maschinenteile unter Verwendung einer strahlerzeugenden Lichtquelle überprüft, vermessen und beurteilt werden kann.

In dem Dokument US 2004/174 542 A1 ist eine Vorrichtung offenbart, in der viele im wesentlichen punktförmige Sensoren zu einem Quadrat angeordnet sind und von einem zu einem Fadenkreuz aufgeweiteten Laserstrahl beleuchtet werden, um anhand der Schnittpunkte der Kanten des Quadrats mit dem Laserstrahl die relative Position zweier Körper zu ermitteln. Das Dokument US 2005/235 504 A1 beschreibt ebenfalls eine Anordnung von Sensoren zu einem Quadrat, wobei es sich um jeweils einen an jeder Kante des Quadrats angeordneten Sensor handelt, auf dem die Auftreffposition eines zu einem Fadenkreuz aufgeweiteten Laserstrahls detektiert werden kann. Das Patent US 3 739 176 beschreibt, wie ein zu einem Fadenkreuz aufgeweiteter Laser von zwei Paaren L-förmig angeordneter Sensoren detektiert wird. Das Patent US 4 973 156 beschreibt, wie Sensoren angeordnet werden können, um Lichtsignale von in unterschiedlichen Richtungen befindlichen Targets unterscheiden zu können. Keines dieser Dokumente beschreibt eine ringförmige Anordnung einander überlappender linearer Sensoren.

Die bekannten Vorrichtungen und Verfahren sehen häufig Präzisionsteile und - komponenten vor, teilweise auch kostenintensive optische Bauteile, und ermöglichen auf diese Weise präzise und zuverlässige Messungen.

Es ist Aufgabe der Erfindung, die bekannten Verfahren und Vorrichtungen geräteseitig derart zu verbessern, daß die Präzision eines solchen Gerätes noch weiter gesteigert werden kann, bei gleichzeitig signifikanter Vergrößerung seines Meßbereiches, und zwar sowohl in lateraler (distanzmäßiger) als auch transversaler (querliegender) Dimension. Damit wird der Einsatz eines erfindungsgemäßen Gerätes auch in solchen

Anwendungsfällen möglich, wo vorherige Meßsysteme in Bezug auf Auflösung, Linearität oder Größe des Meßbereiches bereits an die Grenzen des technisch machbaren gestoßen waren.

Mit einer erfindungsgemäßen Vorrichtung kann überprüft bzw. quantitativ ausgemessen werden:
- translatorischer Versatz zwischen zwei zu vermessenden Gegenständen nach bis zu zwei Richtungen des Raumes, z.B. horizontal und vertikal
- winkelmäßiger Versatz zwischen zwei zu vermessenden Gegenständen, nach bis zu drei Winkelkoordinaten im Raum, z.B. Azimut und Elevation sowie Rollwinkel Die Vorrichtung kann daher sehr gut in einem metrologischen Koordinatenmeßgerät nach z.B. DE 200 02 150 verwendet werden.

Zur Lösung des genannten Problems wird eine Vorrichtung gemäß Anspruch 1 oder 2 vorgesehen. Zusätzlich sind Verwendungen der erfindungsgemäßen Meßvorrichtung vorgesehen.

Die Verwendung des erfindungsgemäßen Meßverfahrens oder der erfindungsgemäßen Meßvorrichtung ist im Sinne der Erfindung nicht nur von Vorteil, die Verlagerung von Maschinenteilen wie Wellen oder Rohren zu vermessen, sondern kann auch mit Vorteil in metrologischen Vorrichtungen wie Meßrobotern oder Koordinatenmeßmaschinen vorgenommen werden.

Zur Erzeugung eines mehrfach aufgefächerten und somit in z.B. zwei oder mehr Ebenen ausgebreiteten Lichtstrahles wird bevorzugt ein Diffraktionsgitter, z.B. in Form eines transparenten Punktgitters, vorgesehen. Alternativ wird stattdessen ein Hologramm oder ein Mikrolinsen-Array vorgesehen. Das Diffraktionsgitter, das Hologramm oder das Mikrolinsen-Array sind bevorzugt transmissiv (d.h. anteilig lichtdurchlässig) und werden mit Vorteil in den Strahlengang eines herkömmlichen Lasers eingesetzt. Sie erzeugen so die gewünschte Strahl-Querschnittsform. Es können die genannten optischen Elemente aber auch in so in den Strahlengang eines Lasers eingesetzt werden, dass auch deren reflektive Eigenschaften zum Tragen kommen und genutzt werden.

Gemäß der Erfindung wird ein herkömmlicher zweidimensional auslesbarer optoelektronischer Sensor funktional ersetzt durch eine Anordnung von entweder drei (auf Seitenlinien eines Dreiecks zueinander angeordneten) linearen optoelektronischen Arrays in CCD- oder CMOS-Technologie, oder einer Anordnung von bevorzugt vier, ggf. weiteren solchen linearen Arrays (auch Sensorzeilen oder Zeilensensoren genannt).

Gegenüber dem vorherigen Stand der Technik besitzt eine solche Anordnung folgende signifikante Vorteile:
- Vergrößerung des Meßbereiches zur Bestimmung eines Laser-Auftreffpunktes oder dessen Äquivalent auf mehr als 35 mm, im Vergleich zu vorher typ. ca. 10 - 20 mm
- Vergrößerung der Optischen Auflösung auf 1 : 100.000 oder mehr, im Vergleich zu vorher ca. 1:10.000 (bei Anwendung von Mittelwertbildungsverfahren)
- Farbdiskrimination, somit weitergehende Unterdrückungsmöglichkeit von Fremdlicht
- verbesserte d.h. höchstpräzise Linearität des Sensors
- Erfassungsmöglichkeit einer weiteren Drehwinkelkoordinate (i.e. Rollwinkel)
- sehr hohe Lichtempfindlichkeit
- sehr schnelle Bereitstellung digitalisierter Meßdaten möglich
- intensive Leuchtdichte bereitstellbar durch Verwendung von Laserlichtquellen von bis zu 5 mW oder mehr bei nicht-kohärenten bzw. mehrfarbigen Lichtquellen
- drastische Kostenreduktion

Mit der vorgestellten Erfindung können die erhaltenen Meßresultate in einem nachfolgenden Schritt und mittels eines zugehörigen Verfahrens dazu herangezogen werden, die Position und/oder Winkellage von fehlerhaft relativ zueinander ausgerichteten Objekten entweder mit großer Genauigkeit zu dokumentieren, oder aber mit höchster Präzision zu korrigieren. - Auch die Verwendung der Erfindung als Meßvorrichtung in einem Koordinatenmeßgerät oder Meßroboter ist mit großem Nutzen verbunden, da die Verlagerung von Prüflingen, Werkstücken usw. relativ zu einem Meßtisch o.ä. mit großer Präzision gemessen und registriert werden kann. Desgleichen ist die Verwendung der Erfindung als Meßvorrichtung für Vermessungsarbeiten im Hoch- oder Tiefbau, speziell im Tunnelbau, vorteilhaft möglich.

Gemäß der Erfindung ist es nützlich, wenn neben der licht- bzw. laserlichterzeugenden Vorrichtung und der lichtempfangenden Vorrichtung zusätzliche Hilfs-Vorrichtungen vorhanden sind, wie etwa in Form zusätzlicher Inclinometer, insbesondere elektronischer Inclinometer, oder visuell inspizierbarer Wasserwaagen.

Die Erfindung wird im folgenden anhand der Zeichnung erläutert. Es zeigt:
- Fig. 1: ein perspektivische schematisierte seitliche Ansicht auf eine bekannte Vorrichtung mit einer einen fadenkreuz- förmigen Licht- oder Laserstrahl aussendenden Einheit und einer lichtempfangenden Einheit, welche jeweils auf Wellenenden montiert sind
- Fig. 2: in einer schematischen Aufsicht die Wirkungsweise der lichtempfangenden Einheit mit vier Zeilensensoren (alternativ PSDs)
- Fig. 3: in einer schematischen Aufsicht die Wirkungsweise der lichtempfangenden Einheit mit drei Zeilensensoren oder PSDs
- Fig. 4: ein Schema einer Ausgestaltung der Erfindung mit einer Mehrzahl an Zeilensensoren oder PSDs, deren effektiver Empfangsbereich durch überlappende Anordnung vergrößert wird
- Fig. 5: ein weiteres Schema einer Ausgestaltung der Erfindung mit einer Mehrzahl an Zeilensensoren oder PSDs, welche etwa ringförmig angeordnet sind
- Fig. 6: eine schematische Aufsicht auf eine weitere Ausgestaltung der Erfindung mit lediglich zwei linearen optoelektronischen Sensoren und einem in der Nähe angebrachten Licht- oder Laser-Sender zur Erzeugung mehrfach flächiger Licht- oder Laserstrahlen
- Fig. 7: eine weitere schematische Aufsicht ähnlich Fig. 6, mit nicht-orthogonal zueinander ausgerichteten Zeilensensoren oder PSDs

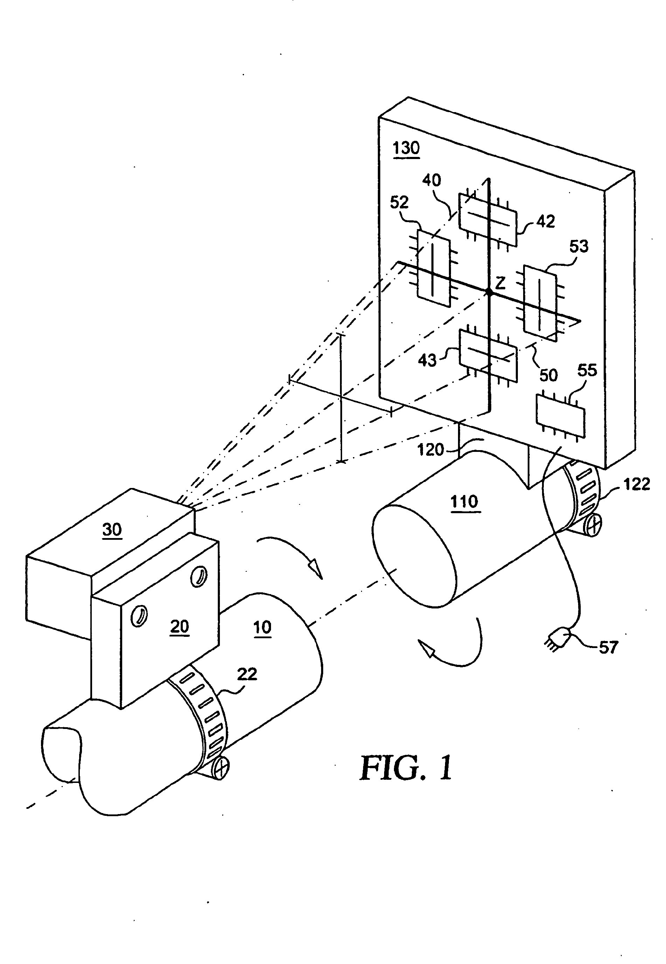

Wie in Fig. 1 schematisch gezeigt, kann ein metrologisches System gemäß der Erfindung in zwei separaten Gehäusen 30, 130 untergebracht sein. Es sind Halte- oder Spannvorrichtungen 22, 122 vorgesehen, so daß ein Anlegen an Wellenenden 10, 110 von Maschinen in an sich bekannter Weise und Technik möglich ist.

Innerhalb des Gehäuses 30 befindet sich eine Vorrichtung zur Erzeugung zweier nach vorne orientierten Laserlichtebenen, welche bevorzugt rechtwinklig zueinander orientiert sind. Wie bereits erwähnt, kann die Erzeugung dieses speziellen Laserlichtes mittels Diffraktionsgitter, eines Hologramms oder einer Mikrolinsen-Anordnung vorgenommen werden.

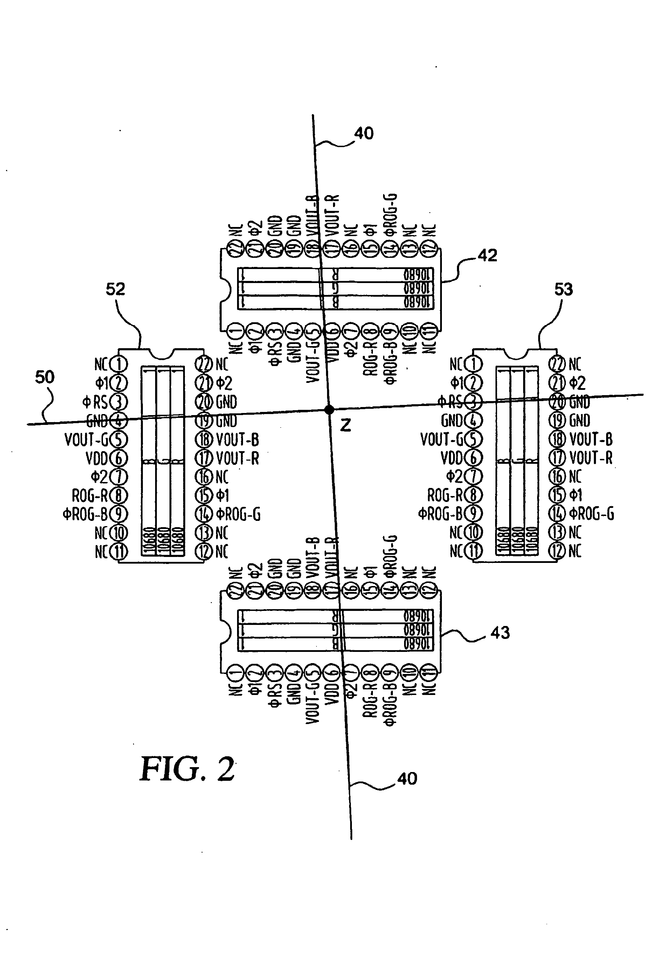

Die mit dem Gehäuse 130 verbundene Vorrichtung stellt also ein Empfangsgerät speziell für einen auftreffenden Laser- oder Lichtstrahl mit im wesentlichen fadenkreuzförmigem Querschnitt dar. Als empfangende Elemente dienen die Zeilensensoren (lineare Arrays) oder positionsempfindliche Detektoren (PSDs) 42, 43, 52 und 53, welche etwa auf den Seiten eines Quadrates angeordnet sind. In das Zentrum des Quadrates kann der Ursprung eines Koordinatensystems gelegt werden. Die elektronische Beschaltung und Auslesung dieser optoelektronischen Bausteine, welche als Zeilensensoren z.B. von der Firma Sony geliefert werden, erfolgt in an sich bekannter Weise, z.B. durch einen übergeordneten Computer (nicht gezeigt). Die Vorrichtung 130 ist in ihren elektrooptischen Eigenschaften einem herkömmlichen rechteckigen elektrooptischen Sensor, welcher den Auftreffort eines einfachen Laserstrahls detektieren soll, in mehrfacher Hinsicht überlegen. Dies betrifft insbesondere die Größe des Meßbereichs, die Empfindlichkeit und die Linearität. Wie in der Fig. 1 gezeigt, wird anstelle der Registrierung eines Auftreffpunktes eines einfachen Laserstrahls (mit dem Querschnitt eines Kreises von ca. 1 bis 5 mm Durchmesser) an der Stelle Z auf einer positionsempfindlichen Diode (PSD) oder eines flächigen pixelorientierten CMOS- oder CCD-Bildsensors nunmehr der fadenkreuzförmige Laserstrahl in innovativer Weise im Zusammenspiel mit einer Mehrzahl, d.h. mindestens zwei, bevorzugt jedoch drei oder vier Zeilensensoren dazu herangezogen, ein maßgebendes Auftreffzentrum Z zu definieren. Es ist ersichtlich, dass der Querschnitt des fadenkreuzförmigen Licht- oder Laserstrahls zweckmäßig durch Linien von mindestens 20 mm Länge definiert wird. Die effektiven Koordinaten des Auftreffzentrums des fadenkreuzförmigen Laserstrahls errechnen sich also durch eine Mittelwertbildung, nämlich anhand der von den per Lichtstrahl beleuchteten Zeilensensoren 42, 43 gelieferten Abszissenwerten und als Mittelwert der von den per Lichtstrahl beleuchteten Zeilensensoren 52, 53 gelieferten Ordinatenwerten. Im Gegensatz zum vorher bekannten Stand der Technik mit zweidimensional auslesbaren Positionssensierenden Dioden (PSD) kann nun bequem die Drehlage des Lichtstrahles (Rollwinkel) relativ zur Empfangsvorrichtung 130 ermittelt werden, wie dies in Fig. 2 symbolisch dargestellt wird. - Die im Gehäuse 130 existierende Vorrichtung kann im Prinzip optional ergänzt werden durch einen eigenen Licht- oder Lasersender, welcher Licht in Nähe des Zentrums Z aussendet. Eine solche kombinierte Vorrichtung kann dann, in Anlehnung an bekannten Stand der Technik, paarweise für vorgesehene Meßvorhaben verwendet werden, zur weiteren Steigerung der Genauigkeit und zur Erfassung nicht nur von Parallelversatz, sondern auch von Winkel-Versatz zwischen den zu vermessenden Gegenständen. Eine solche Vorrichtung mit zusätzlichem Licht- oder Lasersender kann auch einzeln verwendet werden, wenn sie mit einem ihr in Richtung des auszusendenden Lichtstrahles gegenüberliegenden Reflektor zusammenarbeitet. Ein solcher Reflektor kann entweder ein Planspiegel sein oder aus einem reflektierenden Prisma bestehen.

In Fig. 2 wird gezeigt, wie die anteilige Ebene 40 des Licht- oder Laserstrahles auf die Zeilensensoren 42, 43 einfällt und dort nach Farbe, Intensität und Einfallsort mittels an sich bekannter Methoden registriert werden kann (nachgeschaltete elektronische Auswerteschaltungen oder Computer nicht gezeigt, siehe Steckvorrichtung 57). Weiterhin wird gezeigt, wie die anteilige Ebene 50 des Licht- oder Laserstrahles auf die Zeilensensoren 52, 53 einfällt und dort nach Farbe, Intensität und Einfallsort registriert werden kann. Die genannten handelsüblichen pixelorientierten Zeilensensoren haben dabei eine Auflösung von besser als 3 * 10000 Pixel, bei einer Pixel-Gitterkonstante von etwa 3 Micrometer. Für qualitativ geringer arbeitende Vorrichtungen können natürlich auch Zeilensensoren mit einer geringeren Pixel-Zahl vorgesehen werden. Bei Bedarf können stattdessen lineare PSDs vorgesehen werden. Das interessierende Zentrum Z errechnet sich wie erwähnt aus den Mittelwerten der erfaßten d. h. von den Zeilensensoren oder PSDs gelieferten Abszissen- und Ordinatenwerte des auftreffenden Lichtstrahls von fadenkreuzförmigem Querschnitt.

Sender und Empfänger können auch so auf Wellenenden 10, 110 montiert werden, daß der Licht- oder Laserstrahl 40, 50 praktisch achsparallel zum Wellenende 10 abgestrahlt wird. Ein interessierender Torsions- oder Rollwinkel für die genannten Wellenenden errechnet sich dann aus den Differenzwerten der Abszissenwerte der von den Zeilensensoren gelieferten Meßergebnisse bzw. der entsprechenden Ordinatenwerte und dem Abstand der Zeilensensoren von einem ihnen gemeinsamen Zentrum. Dieser Torsions- oder Rollwinkel kann bei der gezeigten Dimensionierung relativ genau bestimmt werden (größenordnungsmäßig ca. 5 Microrad).

Gemäß einem weiteren Beispiel kann mittels einer Mattscheibe, auf welche der Lichtstrahl mit fadenkreuzartigem Querschnitt fällt, und einer projizierenden Optik, welche das Mattscheibenbild auf die Zeilensensoren projiziert, eine indirekte Abbildung des Lichtstrahles vorgenommen werden. Auf diese Weise ist es möglich, den gewünschten Meßbereich entweder zu vergrößern (z.B. auf 300 - 500 mm) oder ggf. zu verkleinern (z. B. auf 5 - 10 mm).

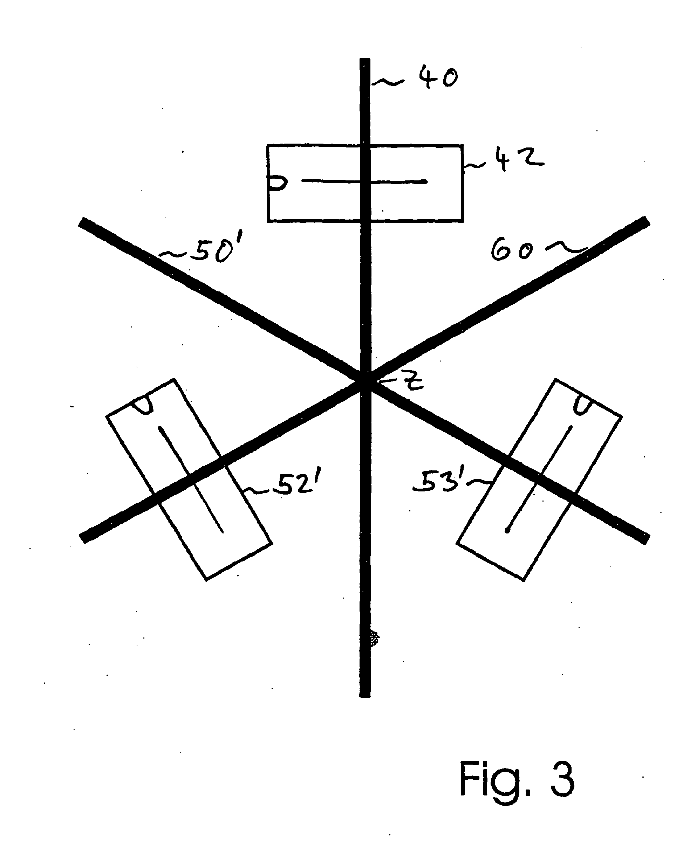

Um Kosten zu reduzieren, ist es beispielsweise, wie in Fig. 3 gezeigt, auch möglich, lediglich 3 auf einem Kreis angeordnete Zeilensensoren vorzusehen. Auf diese fällt dann ein speziell aufgefächerter Lichtstrahl auf, welcher sich durch drei Einzelebenen 40, 50' und 60 auszeichnet. Diese Ebenen weisen somit einen Winkel von z.B. 60 ° gegeneinander auf. Die Errechnung der Lage eines Zentrums Z dieses aufgefächerten Lichtstrahls relativ zu einem durch die Zeilensensoren gebildeten Symmetriezentrum geschieht ebenfalls unter Verwendung bekannter Methoden der Geometrie und der Algebra. Sobald der aufgefächerte Lichtstrahl nur mittige Elemente der Zeilensensoren beleuchtet, kann, sofern kein zusätzlicher winkelmäßiger Versatz vorliegt, auf eine korrekte Ausrichtung zwischen den zu vermessenden Gegenständen geschlossen werden.

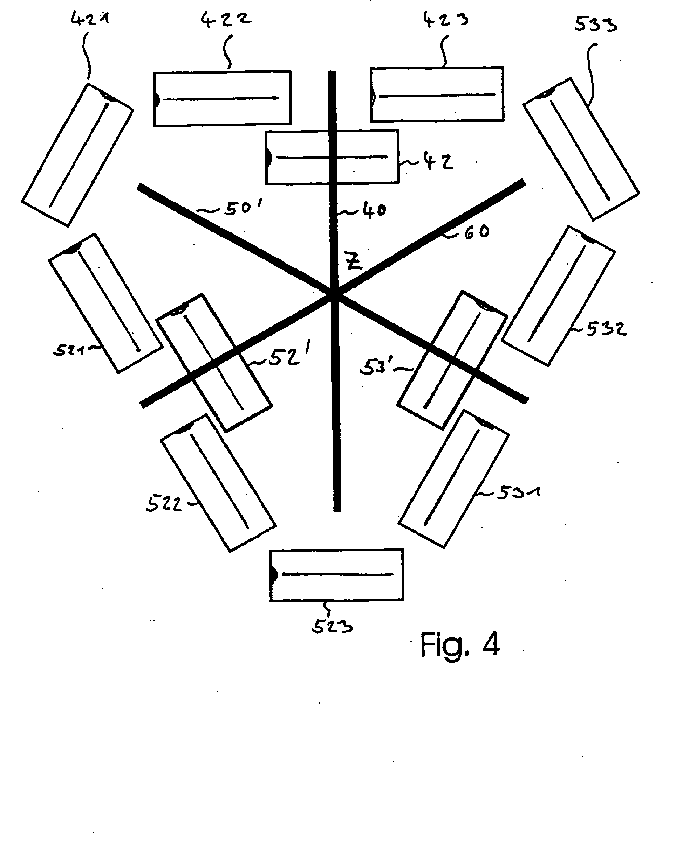

Wie in Fig. 4 gezeigt, wird erfindungsgemäß der Meßbereich einer Anordnung nach Fig. 3 ohne optische Mittel vergrößert. Wie gezeigt, sind neben den Zeilensensoren 42, 52' und 53' weitere, jeweils parallel zu diesen angeordnete Zeilensensoren 422, 423 ; 521, 522; 531, 532 vorhanden. Diese zusätzlichen Zeilensensoren sind also in einem radial außenliegenden Bereich angeordnet. Durch die dargestellte überlappende Anordnung der Zeilensensoren wird also ein im Vergleich zum Stand der Technik nochmals erheblich verlängerter Meßbereich bereitgestellt. Es sind effektive Meßflächen von 100 mm * 100 mm und mehr darstellbar. Falls mit starker Verlagerung oder Verdrehung der Lichtstrahl-Kombination bestehend aus Lichtstrahlen 40, 50', 60 relativ zu den Zeilensensoren zu rechnen ist, können wie dargestellt weitere Zeilensensoren 421, 523, 533 vorgesehen werden. Auf diese Weise wird ein zusätzlich vergrößerter Meßbereich bereitgestellt.

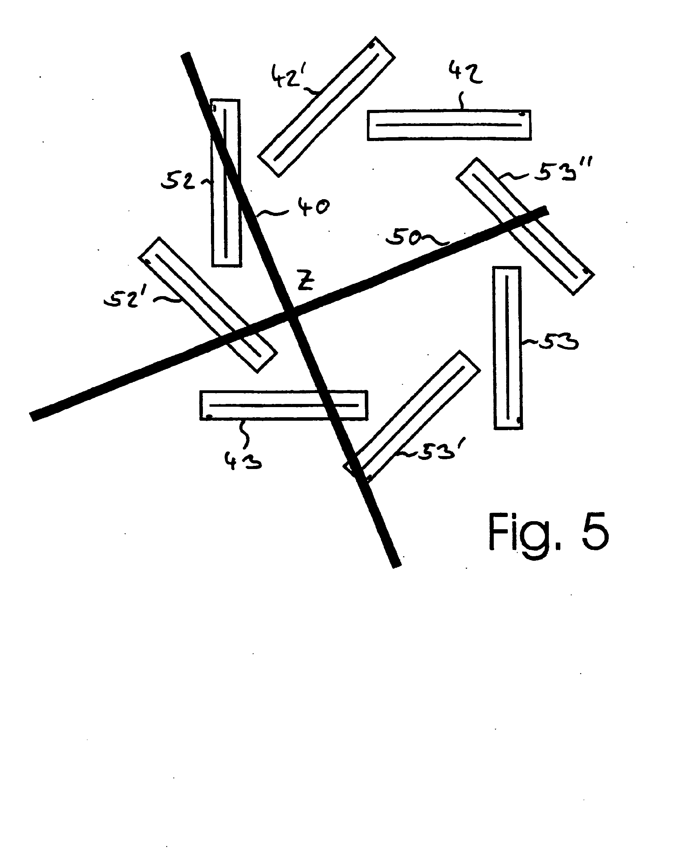

Wie in Fig. 5 dargestellt, wird erfindungsgemäß, ein im Prinzip beliebig großer Meßbereich zur Erfassung der Lage eines mehrfach aufgefächerten Lichtstrahls relativ zu einer Empfangsvorrichtung dargestellt, wobei eine Mehrzahl an Zeilensensoren (42, 42', 52, 52', 43, 53', 53, 53') in ringförmiger und gegebenenfalls auch überlappender Weise auf einer geeigneten Meßfläche angeordnet werden. Es versteht sich, daß in rauher Umgebung ein geeignetes schützendes Gehäuse mit entsprechenden Aperturen für die dargestellten Zeilensensoren von Nutzen ist. Wie in Fig. 5 schematisch dargestellt (also ohne eine den Zeilensensoren 42 bis 53 nachzuschaltende Elektronik), kann in einer solchen oder in einer vergleichbaren Anordnung eine sehr große Meßfläche geschaffen werden. Mit dieser kann die Position und/oder Drehlage eines parallel verlagerten und/oder um seine Längsachse verdrehten Lichtstrahls mit mehreren anteiligen Licht-Flächen oder -Ebenen (40, 50) sehr präzise gemessen werden. Zu diesem Zweck wird, wie in den anderen beschriebenen Fällen auch, der Auftreffort des Lichtstrahls auf die belichteten Zeilensensoren elektronisch ermittelt. Anhand solcher ermittelten Meßdaten ist es dann unter Verwendung standardmäßiger mathematisch-geometrischer Methoden möglich, die Lage des Zentrums Z des Lichtstrahls relativ zu einem den Zeilensensoren zugeordneten Koordinatensystem mit hoher bis höchster Präzision zu bestimmen.

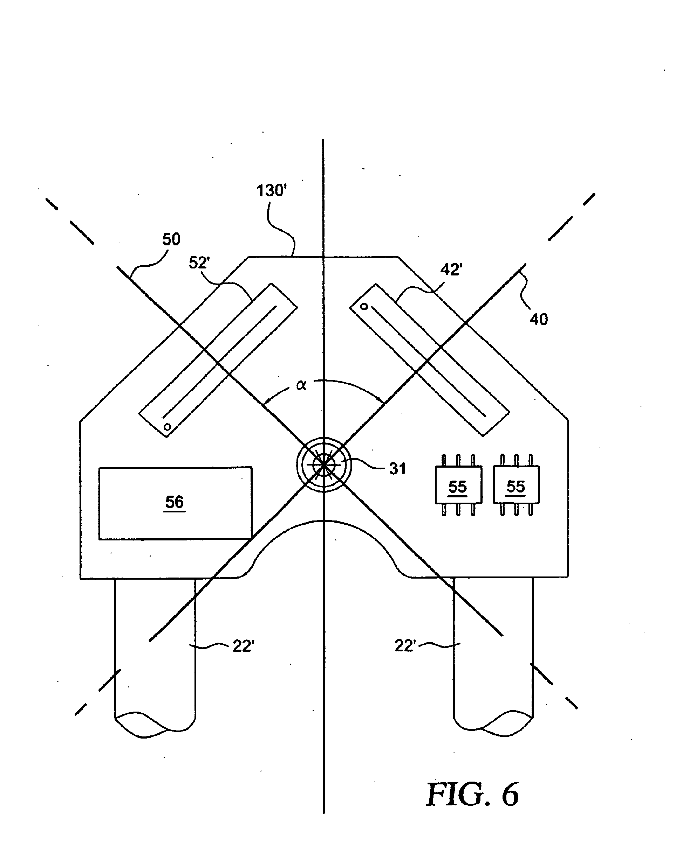

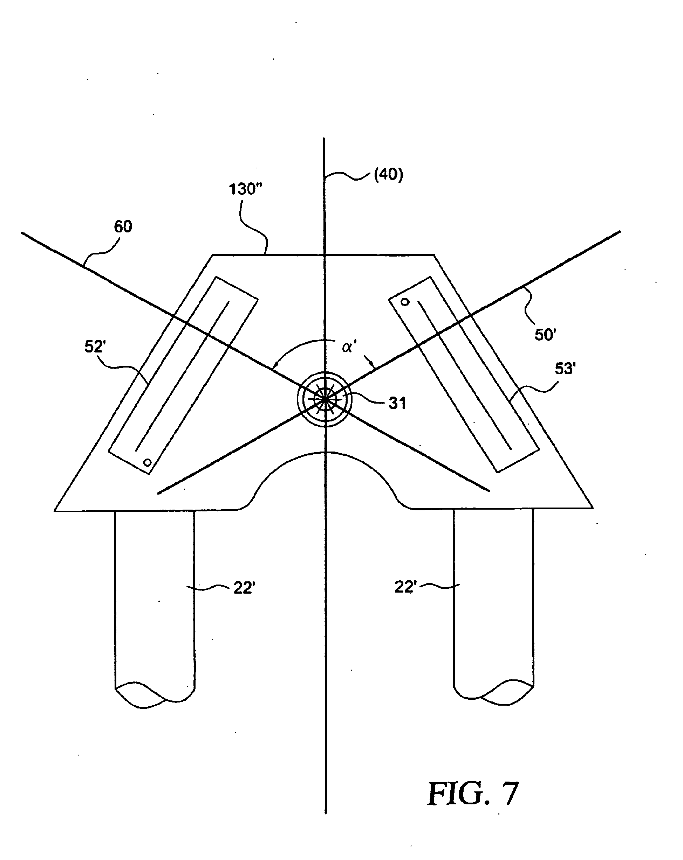

Eine noch kostengünstigeres Beispiel mit lediglich zwei linearen optoelektronischen Sensoren wird in Fig. 6 gezeigt. Diese arbeitet allerdings nicht so genau wie eine entfernt vergleichbare Einrichtung gemäß Fig. 1 bzw. 2, da keine Mittelwertbildung durchgeführt werden kann, außerdem ist es nicht direkt möglich, einen Drill- oder Torsionswinkel zwischen den zu vermessenden Gegenständen zu erfassen. - Neben den Zeilensensoren bzw. PSDs 42', 52', welche in oder auf einem Gehäuse 130' so plaziert sind, dass ihre Längsrichtungen orthogonal aufeinander stehen, kann optional ein Licht- oder Lasersender 31 vorgesehen werden. Wie zu den vorherigen Figuren erläutert, ist es auch in diesem Falle so, dass die beiden Zeilensensoren bzw. PSDs dafür vorgesehen sind, die Position von Auftreffpunkten eines mehrfach aufgefächerten Licht- oder Laserstrahl auf diesen Sensoren zu detektieren und als elektronisches Signal an eine übergeordnete Elektronik (55 bzw. nachgeschaltete Elektronik, nicht gezeigt) weiterzureichen. Die linearen optoelektronischen Sensoren 42' und 52', die Elektronik und ggf. der Licht- oder Lasersender 31 können mit einer Batterie gespeist werden, welche sich in einem Batteriegehäuse 56 befinden. Ggf. kann eine drahtlose Datenübertragung (nicht gezeigt) vorgesehen werden, welche eine Daten-Kommunikation mit externen Rechnern, einer Elektronik, tragbaren Telefonen, sogenannten PDA-Geräten ermöglicht. Wie ersichtlich, kann eine Parallelverlagerung des Gehäuses 130' gegenüber einem auf dieses einfallenden mehrfach flächigen Licht- oder Laserstrahl bereits mit den beiden Sensoren 42' und 52' erfaßt werden. Im gezeigten Fall liegen die flächigen Licht- oder Laserstrahlen 40, 50 orthogonal zueinander, d.h. die diesen zugeordneten Flächennormalen stehen senkrecht aufeinander. Die in Fig. 6 (und auch in Fig. 7) gezeigte Ausführungsform ist dafür geeignet, in paarweiser Kombination betrieben zu werden, d. h. im Zusämmenspiel mit einem praktisch völlig gleichartigen, frontal gegenüberliegenden Exemplar einer solchen Vorrichtung. Die Haltevorrichtungen 22' entsprechen vergleichbaren Befestigungs-Konstruktionen nach dem Stand der Technik und dienen dazu, das Gehäuse 130 auf z.B. ein Wellenende zu spannen (vgl. Fig. 1, Bezugsziffern 10, 110 und 20, 120).

Ein weiteres Beispiel gemäß Fig. 7 sieht, im Gegensatz zu Fign. 3, 4 oder 5 ebenfalls nur zwei lineare optoelektronische Sensoren vor. In diesem Falle sind die Längsachsen der Sensoren 52' und 53' jedoch beispielsweise unter einem Winkel von 60° zueinander angeordnet, so daß eine gedrungenere Bauform ermöglicht wird. Ansonsten entspricht die Funktionsweise im wesentlichen der gemäß Fig. 6 dargestellten. Allerdings sind die gezeigten Sensoren 50', 52' besonders dafür geeignet, einen Licht- oder Laserstrahl zu empfangen, welcher aus zumindest zwei Einzelflächen 50', 60 zusammengesetzt ist. Die Normalen dieser Einzelflächen weisen im gezeigten Beispiel einen Winkel von 60° zueinander auf, so daß der gezeigte Winkel alpha einen Wert von 120° annimmt. - Es kann optional eine zusätzliche dritte Lichtfläche (40) vorgesehen werden, sofern dies aus Gründen der Herstellkosten angeraten erscheint, auch wenn diese Lichtfläche nur bei extremen Verdrehwinkeln zwischen den zu vermessenden Gegenständen in Funktion tritt.

Auch das Beispiel gemäß Fig. 7 mit optional vorgesehenem eigenem Licht- oder Lasersender 31 ist speziell geeignet, in paarweiser Kombination mit einer zweiten, gleichwirkenden Vorrichtung dieser Art zusammenzuarbeiten. Auch in diesem Falle ist dann vorgesehen, daß sich diese gleichwirkenden Vorrichtungen frontal gegenüberstehen. Auf diese Weise kann dann wechselweise der Licht- oder Lasersender 31 der einen Vorrichtung die gegenüberliegenden Zeilensensoren 50', 52' beleuchten. Auf diese Weise kann, analog zu Vorrichtungen nach dem Stand der Technik, in zuverlässiger Weise sowohl ein Parallelversatz (translatorischer Versatz) als auch ein Winkelversatz (angularer Versatz) zwischen den zu vermessenden Objekten nach jeweils zwei zugehörigen Koordinaten quantitativ erfaßt werden.

Anstelle der gemäß Fig. 6 und 7 vorgesehenen Montagemöglichkeit für ein Gehäuse 130', 130" an z.B. Wellen können andere Montage- oder Spannvorrichtungen vorgesehen sein, welche beispielsweise so gestaltet sind, daß die Figurenachse des bzw. der Licht- oder Lasersender mit mindestens einer Symmetrieachse der zu vermessenden Gegenstände annähernd koinzidiert.

## Patentansprüche

1. Vorrichtung zur qualitativen oder quantitativen Bestimmung der räumlichen Lage zweier Körper relativ zueinander, bezüglich translatorischer und/oder angularer Koordinatensysteme, enthaltend:
- eine erste Vorrichtung (30), welche einen in zwei oder mehr Ebenen aufgeweiteten Lichtstrahl (40, 50) aussendet, wobei der Lichtstrahl einen kreuz- oder sternförmigen Querschnitt aufweist
- eine zweite Vorrichtung (130), die Empfangsvorrichtung, mit mindestens drei ersten optoelektronischen Linearsensoren (42, 52', 53') in Form von Zeilen-Sensoren oder
PSDs zur direkten oder indirekten Bestimmung von Auftreffpunkten des in zwei oder mehr Ebenen aufgeweiteten Lichtstrahles auf den genannten optoelektronischen Linearsensoren,
**dadurch gekennzeichnet, dass**
die mindestens drei ersten Linearsensoren (42, 52', 53') auf einem Kreis angeordnet sind und dass weitere, jeweils parallel zu den mindestens drei ersten Linearsensoren (42, 52', 53') angeordnete Linearsensoren (422, 423, 521, 522, 531, 532) in einem radial aussenliegenden Bereich zu den ersten Linearsensoren (42, 52', 53') überlappend angeordnet sind, so dass der Messbereich vergrössert wird.

2. Vorrichtung zur qualitativen oder quantitativen Bestimmung der räumlichen Lage zweier Körper relativ zueinander, bezüglich translatorischer und/oder angularer Koordinatensysteme, enthaltend:
- eine erste Vorrichtung (30), welche einen in zwei oder mehr Ebenen aufgeweiteten Lichtstrahl (40, 50) aussendet, wobei der Lichtstrahl einen kreuz- oder sternförmigen Querschnitt aufweist
- eine zweite Vorrichtung (130), die Empfangsvorrichtung, mit einer Mehrzahl an optoelektronischen Linearsensoren (42, 42', 43, 52, 52', 53, 53', 53") in Form von Zeilen-Sensoren oder PSDs zur direkten oder indirekten Bestimmung von Auftreffpunkten des in zwei oder mehr Ebenen aufgeweiteten Lichtstrahles auf den genannten optoelektronischen Linearsensoren,
**dadurch gekennzeichnet, dass**
die Mehrzahl an Zeilensensoren (42, 42', 43, 52, 52', 53, 53', 53") in ringförmiger und überlappender Weise auf einer Messfläche angeordnet sind, so dass die Position und/oder Drehlage eines parallel verlagerten und/oder um seine Längsachse verdrehten Lichtstrahls mit den anteiligen Lichtebenen (40,50) präzise messbar ist.

3. Verwendung einer Vorrichtung gemäß Anspruch 1 oder 2 zur qualitativen oder quantitativen Bestimmung der räumlichen Lage zweier Körper relativ zueinander, bezüglich translatorischer und/oder angularer Koordinatensysteme.

4. Verwendung einer Vorrichtung gemäß Anspruch 1 oder 2 in einem Meßroboter oder in einem Koordinatenmeßgerät.

5. Verwendung einer Vorrichtung gemäß Anspruch 1 oder 2 zum Ausrichten von Maschinen oder Maschinenteilen relativ zueinander.

6. Verwendung einer Vorrichtung gemäß Anspruch 1 oder 2 zum Ausrichten von Rohren oder Pipelines relativ zueinander.

7. Verwendung einer Vorrichtung gemäß Anspruch 1 oder 2 bei Vermessungsaufgaben im Hoch- oder Tiefbau.

8. Verwendung der Vorrichtung gemäß Anspruch 1 oder 2 und gemäß Anspruch 6, bei Vermessungsaufgaben im Tunnelbau.

## Claims

1. Device for qualitatively or quantitatively determining the spatial position of two bodies relative to one another with reference to translational and/or angular coordinate systems, comprising:
- a first device (30) which emits a light beam (40, 50) expanded in two or more planes, the light beam having a cruciform or star-shaped cross section, and
- a second device (130), the receiving device, with at least three first optoelectronic linear sensors (42, 52', 53') in the form of line sensors or PSDs for directly or indirectly determining incidence points of the light beam expanded in two or more planes on said optoelectronic linear sensors,
**characterized in that**
the at least three first linear sensors (42, 52', 53') are arranged on a circle, and **in that** further linear sensors (422, 423, 521, 522, 531, 532), respectively arranged parallel to the at least three first linear sensors (42, 52', 53'), are arranged in overlapping fashion in a radially outlying region relative to the first linear sensors (42, 52', 53') such that the measurement range is enlarged.

2. Device for qualitatively or quantitatively determining the spatial position of two bodies relative to one another with reference to translational and/or angular coordinate systems, comprising:
- a first device (30) which emits a light beam (40, 50) expanded in two or more planes, the light beam having a cruciform or star-shaped cross section, and
- a second device (130), the receiving device, with a plurality of optoelectronic linear sensors (42, 42', 43, 52, 52', 53, 53', 53") in the form of line sensors or PSDs for directly or indirectly determining incidence points of the light beam expanded in two or more planes on said optoelectronic linear sensors, **characterized in that**
the plurality of line sensors (42, 42', 43, 52, 52', 53, 53', 53") are arranged in an annular and overlapping way on a measurement surface such that the position and/or rotational position of a light beam displaced in parallel and/or rotating about its longitudinal axis can be measured precisely with the proportional light planes (40, 50).

3. Use of a device in accordance with Claim 1 or 2 for the purpose of quantitatively or qualitatively determining the spatial position of two bodies relative to one another with reference to translational and/or angular coordinate systems.

4. Use of a device in accordance with Claim 1 or 2 in a measuring robot or in a coordinate measuring machine.

5. Use of a device in accordance with Claim 1 or 2 for aligning machines or machine parts relative to one another.

6. Use of a device in accordance with Claim 1 or 2 for aligning pipes or pipelines relative to one another.

7. Use of a device in accordance with Claim 1 or 2 in surveying tasks in building and civil engineering.

8. Use of the device in accordance with Claim 1 or 2 and in accordance with Claim 6 in surveying tasks in tunnel construction.

## Revendications

1. Dispositif de détermination qualitative ou quantitative de la position dans l'espace de deux corps l'un par rapport à l'autre, en relation avec des systèmes de coordonnées translatoires et/ou angulaires, comprenant :
- un premier dispositif (30) qui émet un rayon lumineux (40, 50) déployé sur deux plans ou plus, le rayon lumineux présentant un section transversale en forme de croix ou d'étoile,
- un deuxième dispositif (130), le dispositif de réception, comprenant au moins trois premiers capteurs linéaires optoélectroniques (42, 52', 53') sous la forme de capteurs en ligne ou de PSD pour la détermination directe ou indirecte des points d'incidence du rayon lumineux déployé sur deux plans ou plus sur lesdits capteurs linéaires optoélectroniques, **caractérisé en ce que**
les au moins trois premiers capteurs linéaires (42, 52', 53') sont disposés sur un cercle et que des capteurs linéaires (422, 423, 521, 522, 531, 532) supplémentaires, disposés respectivement en parallèle avec les au moins trois premiers capteurs linéaires (42, 52', 53'), sont disposés dans une zone extérieure dans le sens radial par rapport aux premiers capteurs linéaires (42, 52', 53') en se chevauchant de telle sorte que la zone de mesure est agrandie.

2. Dispositif de détermination qualitative ou quantitative de la position dans l'espace de deux corps l'un par rapport à l'autre, en relation avec des systèmes de coordonnées translatoires et/ou angulaires, comprenant :
- un premier dispositif (30) qui émet un rayon lumineux (40, 50) déployé sur deux plans ou plus, le rayon lumineux présentant un section transversale en forme de croix ou d'étoile,
- un deuxième dispositif (130), le dispositif de réception, comprenant une pluralité de capteurs linéaires optoélectroniques (42, 42', 43, 52, 52', 53, 53', 53") sous la forme de capteurs en ligne ou de PSD pour la détermination directe ou indirecte des points d'incidence du rayon lumineux déployé sur deux plans ou plus sur lesdits capteurs linéaires optoélectroniques, **caractérisé en ce que**
la pluralité de capteurs en ligne (42, 42', 43, 52, 52', 53, 53', 53") est disposée en forme d'anneau et en se chevauchant sur une surface de mesure, de sorte que la position et/ou la position de rotation d'un rayon lumineux décalé parallèlement et/ou ayant subit un pivotement autour de son axe longitudinal peuvent être mesurées avec précision avec les plans de lumière (40, 50) proportionnels.

3. Utilisation d'un dispositif selon la revendication 1 ou 2 pour la détermination qualitative ou quantitative de la position dans l'espace de deux corps l'un par rapport à l'autre, en relation avec des systèmes de coordonnées translatoires et/ou angulaires.

4. Utilisation d'un dispositif selon la revendication 1 ou 2 dans un robot de mesure ou dans un appareil de mesure de coordonnées.

5. Utilisation d'un dispositif selon la revendication 1 ou 2 pour aligner des machines ou des parties de machine les unes par rapport aux autres.

6. Utilisation d'un dispositif selon la revendication 1 ou 2 pour aligner des tubes ou des canalisations les uns par rapport aux autres.

7. Utilisation d'un dispositif selon la revendication 1 ou 2 lors des opérations de mesure en construction ou en génie civil.

8. Utilisation du dispositif selon la revendication 1 ou 2 et selon la revendication 6 lors des opérations de mesure dans la construction de tunnels.
